# EUROPÄISCHE PATENTSCHRIFT

(11) **EP 1 882 875 B1**
(45) Veröffentlichungstag und Bekanntmachung des Hinweises auf die Patenterteilung: **15.04.2009**
(21) Anmeldenummer: 06405321.8
(22) Anmeldetag: 27.07.2006
(51) Int. Cl.: F16L 21/03, F16L 21/04

(54) **Steckmuffe zum Verbinden von Rohren**
Plug-in sleeve for connecting pipes
Manchon emboîtable pour raccorder des tuyaux

(43) Veröffentlichungstag der Anmeldung: 30.01.2008
(73) Patentinhaber: GEBERIT TECHNIK AG, 8645 Jona (CH)
(72) Erfinder: Bauer, Thomas, 8645 Jona (CH); Kipfer, Richard, 8706 Meilen (CH)
(74) Vertreter: Groner, Manfred

(56) Entgegenhaltungen:
- EP-A2- 1 219 883
- DE-A1- 19 963 368
- GB-A- 1 276 052
- JP-A- 2000 146 045
- US-A1- 2004 250 403
- US-A1- 2006 175 765

## Beschreibung

Die Erfindung betrifft eine Steckmuffe für eine Rohrleitung nach dem Oberbegriff des Anspruchs 1.

Steckmuffen dienen in der Sanitärtechnik als Verbindungsstücke für zwei Rohrenden. Sie können als Formstücke oder als Erweiterung eines Rohres ausgebildet sein. Steckmuffen werden beispielsweise zum Herstellen von Abwasserleitungen aus Kunststoffrohren verwendet. Bei dieser Anwendung muss die Steckmuffe eine dauerhafte Verbindung gewährleisten und dies auch in rauer und schmutziger Umgebung. Sie soll zudem auch an schwer zugänglichen Orten einfach montierbar sein.

Bei vergleichsweise grossen Rohrdurchmessern, wie beispielsweise bei Abwasserleitungen, ist eine Dichtung erforderlich, die mit vergleichsweise hoher Spannung an dem in die Steckmuffe eingesetzte Rohrende anliegt. Dies hat zur Folge, dass die Einschubkraft, die zum Einschieben des Rohrendes in die Steckmuffe erforderlich ist, entsprechend vergleichsweise hoch ist. Eine solche hohe Einschubkraft erschwert die Montage erheblich.

In der EP 0 884 517 A des Anmelders wird eine Steckmuffe vorgeschlagen, bei welcher diese Einschubkraft auch bei grossen Rohrdurchmessern gering ist. Hierzu ist eine Dichtung vorgeschlagen, die durch einen Schlauch gebildet wird, der vor der Montage evakuiert wird, so dass er flach an der Innenseite der Steckmuffe anliegt und damit das Rohrende im Wesentlichen ohne Reibung an der Dichtung eingesetzt werden kann. Nach dem Einsetzen des Rohrendes wird der Schlauch belüftet, der sich dadurch ausdehnt und die gewünschte Dichtwirkung und Auszugskraft übernimmt.

Durch die EP 1 188 978 A des Anmelders wird eine Steckmuffe vorgeschlagen, die zur Gewährleistung einer hohen Auszugskraft einen Krallring sowie einen Dichtring aufweist. Der Krallring besitzt eine Mehrzahl von schneidezahnformigen und biegeelastischen Lappen, die beim Einschieben des Rohrendes sich umlegen und an der Aussenseite dieses Rohrendes anliegen.

Die DE-A-199 63 368 offenbart eine gattungsgemässe Steckmuffe. In Einschubrichtung des anzuschliessenden Rohres gesehen sind in der Steckmuffe zuerst eine Druckhülse und anschliessend ein Dichtelement angeordnet, das als Viellippen-Dichtelement ausgebildet ist. In gekuppeltem Zustand wird das Dichtelement durch die Druckhülse vorgespannt.

Die US-A-2004/0250403 offenbart eine Verbindung zwischen zwei zylindrischen Luftleitungen. Die eine dieser Leitungen weist einen Dichtungsring und einen Federring auf. Beim Zusammenstecken der Enden der beiden Luftleitungen wird der Federring radial zusammengespresst und achsial verlängert. Durch die achsiale Verlängerung des Federrings wird der Dichtungsring gegen eine Schulter der einen Luftleitung gespannt.

Die JP-A-2000 146 045 offenbart eine Kupplung mit einer Muffe, die an einer Innenseite einen ersten und einen zweiten Dichtungsring aufweist. Das in die Muffe einzuschiebende Ende besitzt frontseitig sich radial nach aussen erstreckende Federzungen, welche beim Einschieben des Rohrendes die Dichtungen jeweils radial nach aussen pressen. Nach dem Fügen der Verbindung müssen die Federzungen an einem Seil aus dem Rohr herausgezogen werden.

Die US-A-2006/0175765 offenbart eine Steckmuffe, die an der Innenseite eine Nute aufweist, in die ein Dichtungsring eingesetzt ist, der aus einer festen und einer gummielastischen Komponente hergestellt ist.

Der Erfindung liegt die Aufgabe zugrunde, eine weitere Steckmuffe der genannten Art bereitzustellen, die bei vergleichsweise kleiner Einschubkraft eine hohe Auszugskraft gewährleistet und die dennoch funktionssicher ist und eine einfache Montage ermöglicht. Die Steckmuffe soll sich insbesondere für Abwasserleitungen aus Kunststoffrohren mit vergleichsweise grossem Durchmesser eignen und kostengünstig herstellbar sein.

Die Aufgabe ist bei einer gattungsgemässen Steckmuffe gemäss Anspruch 1 gelöst.

Bei der erfindungsgemässen Steckmuffe wird die erforderliche Spannkraft der Dichtung durch Verschieben der Hülse erzeugt. Die Reibung der Dichtung kann damit zumindest am Anfang des Einschiebens wesentlich vermindert werden. Die erforderlich Spannung bzw. Reibung der Dichtung wird erst dann erreicht, wenn das Rohrende vollständig in die Steckmuffe eingesetzt ist. Die Einschubkraft kann damit wesentlich vermindert werden, ohne dass die Auszugskraft verkleinert werden muss. Die Montage ist sehr einfach, da lediglich das Rohrende in die Öffnung der Steckmuffe bis zu einem Anschlag eingesetzt werden muss. Weiter Manipulationen, wie beispielsweise das Anziehen einer Spannmutter oder dergleichen ist nicht erforderlich. Nach dem Einschieben des Rohrendes in die Steckmuffe ist die Verbindung hergestellt. Durch Verschieben der Hülse in die Ausgangsstellung ist grundsätzlich eine lösbare Verbindung möglich. Ein wesentlicher Vorteil der Erfindung wird auch darin gesehen, dass durch die Verschiebung der Hülse ein Rastvorgang möglich ist.

Nach der Erfindung ist vorgesehen, dass sich die Hülse in Einschubrichtung des Rohrendes gesehen nach der Dichtung angeordnet ist. Die Hülse befindet sich nach der Montage dann im Wesentlichen vollständig innerhalb der Steckmuffe. Gegen aussen ist sie durch die Dichtung geschützt.

Nach einer Weiterbildung der Erfindung ist vorgesehen, dass die Hülse an einem inneren Rand einen Anschlag für das anzuschliessende Rohrende aufweist. Dieser Anschlag ist vorzugsweise ein nach innen abgebogener Rand, an dem das anzuschliessende Rohrende mit seiner Stirnseite anliegt und damit die Hülse in eine Endposition verschiebt. Diese Endposition ist gemäss einer Weiterbildung der Erfindung durch eine Schulter an der Innenseite der Steckmuffe gebildet.

Nach der Erfindung ist vorgesehen, dass die Hülse mit der Dichtung verbunden ist, derart, dass beim Verschieben der Hülse die Dichtung ebenfalls verschoben und dadurch gegen die Aussenseite des anzuschliessenden Rohrendes spannbar ist. Das Spannen der Dichtung erfolgt gemäss einer Weiterbildung der Erfindung mittels einer konischen Innenseite der genannten Öffnung. Diese konische Innenseite verjüngt sich in Einschubrichtung. Beim Verschieben der Hülse gleitet die Dichtung an dieser konischen Innenseite und wird dann radial gespannt, so dass sich ihr Durchmesser verkleinert. Das Spannen der Dichtung kann mit einem vergleichsweise kurzen Weg erreicht werden. Die Hülse muss somit lediglich um einen kleinen Weg achsial verschoben werden. Beispielsweise kann dieser Weg etwa 1 cm oder kleiner sein.

Nach einer Weiterbildung der Erfindung ist die Verbindung lösbar. Hierzu ist gemäss einer Weiterbildung der Erfindung am Rand der Steckmuffe ein Ring gelagert, der drehbar ist und der beim Drehen die Hülse in die Ausgangsstellung bringt. Die Verbindung kann aber auch unlösbar sein.

Nach einer Weiterbildung der Erfindung weist die Hülse Rastmittel auf, welche die Hülse beim Verschieben bzw. Dehnen verrasten.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Figur 1: ein Längsschnitt durch eine erfindungsgemässe Steckmuffe mit einem anzuschliessenden Rohrende in der Ausgangsposition,
- Figur 2: ein Schnitt gemäss Figur 1, jedoch mit dem anzuschliessenden Rohrende in der Endlage,
- Figur 3: ein Längsschnitt durch eine nicht erfindungsgemässe Steckmuffe gemäss einer Variante mit einem anzuschliessenden Rohrende in der Ausgangsposition,
- Figur 4: ein Schnitt gemäss Figur 3, jedoch mit dem anzuschliessenden Rohrende in der Endlage,
- Figur 5: ein Längsschnitt durch eine nicht erfindungsgemässe Steckmuffe gemäss einer weiteren Variante mit einem anzuschliessenden Rohrende in einer Ausgangsposition und
- Figur 6: ein Schnitt gemäss Figur 5, jedoch mit dem anzuschliessenden Rohrende in der Endlage.

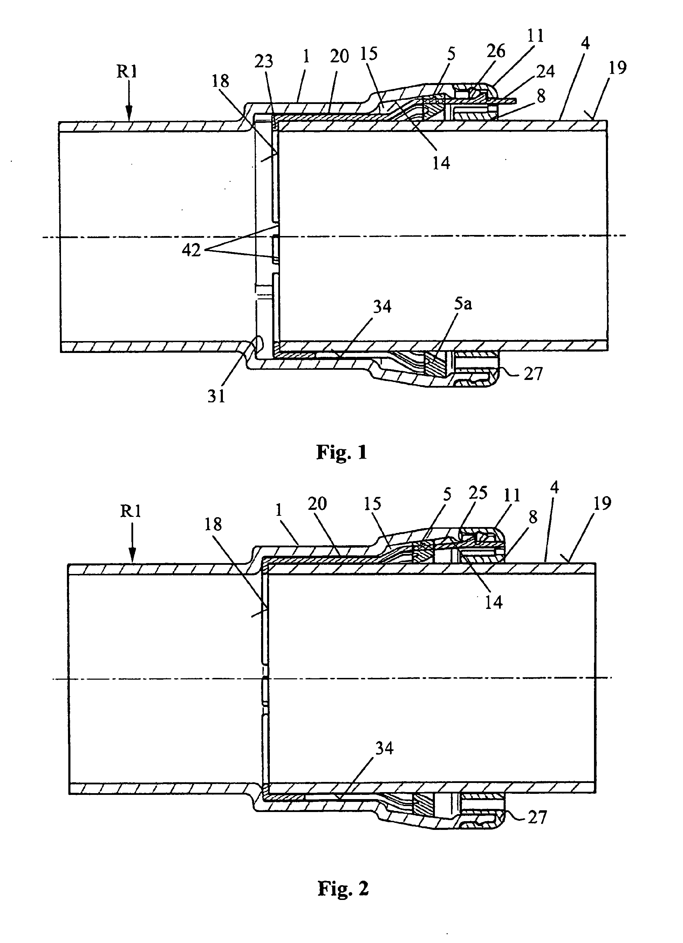

Die Figur 1 zeigt eine Steckmuffe 1 für eine Rohrleitung R1, die eine kreiszylindrische Öffnung 8 für die Aufnahme eines Rohrendes 4 aufweist. Die Steckmuffe 1 als auch das Rohrende 4 sind vorzugsweise aus einem geeigneten Kunststoff hergestellt. Die Rohrleitung R1 ist beispielsweise eine Abwasserleitung mit einem Rohrquerschnitt gemäss den entsprechenden Normen. Der Durchmesser kann somit vergleichsweise gross sein. Die Steckmuffe 1 ist ein Formstück oder ein aufgeweitetes Ende eines Rohres. Die Öffnung 8 besitzt eine Innenseite 34, die an einer konischen Innenseite 14 radial aufgeweitet ist und eine umlaufende Nut 15 bildet. In dieser Nut 15 ist eine Dichtung 5 gelagert. Diese Dichtung 5 ist ringförmig ausgebildet und besitzt eine Dichtlippe 5a, die an einer Aussenseite 19 des Rohrendes 4 anliegt. Das Rohrende 4 ist hier in der Ausgangsposition und die Dichtung 5 befindet sich ebenfalls in einer noch nicht gespannten Ausgangsposition. Die Dichtung 5 besteht aus einem gummielastischen geeigneten Werkstoff.

In die Öffnung 8 ist eine Hülse 20 eingesetzt und in dieser begrenzt verschieblich gelagert. Die Figur 1 zeigt die Hülse 20 in einer vorbestimmten Ausgangsposition. Sie besitzt in Einschubrichtung an einem vorderen Ende 11 einen radial nach innen ragenden Rand 23, der einen Anschlag für eine Stirnseite 18 des Rohrendes 4 bildet. Die Hülse 20 besteht beispielsweise aus Kunststoff, denkbar ist aber auch eine Ausführung beispielsweise aus Blech. Sie kann mit hier nur teilweise sichtbaren achsial verlaufenden Schlitzen 42 versehen sein. Die Hülse 20 besitzt an ihrem Umfang mehrere stab- oder zungenförmige Enden 24, die jeweils einen radial nach aussen vorstehenden Nocken 25 besitzen. In der Nähe dieser Enden 24 ist die Dichtung 5 fest mit der Hülse 20 verbunden. Beispielsweise kann die Dichtung 5 an der Hülse 20 angespritzt sein. Die Enden 24 ragen durch einen Ring 27 hindurch, der begrenzt drehbar auf dem vorderen Ende 11 der Steckmuffe 1 gelagert ist. Dieser Ring 27 ist vorzugsweise ebenfalls aus Kunststoff hergestellt und beispielsweise aufgerastet. Im Inneren des Rings 27 sind Mitnehmer 26 angeordnet, die jeweils an einem Nocken 25 anliegen, wie dies in Figur 1 gezeigt ist.

Wird das Rohrende 4 von der in Figur 1 gezeigten Ausgangsposition in die in Figur 2 gezeigte Endposition achsial verschoben, so wird entsprechend die Hülse 20 in die in Figur 2 gezeigte Position verschoben. Die Hülse 20 liegt hierbei mit dem Rand 23 an einer Schulter 31 der Steckmuffe 1 an. Diese Schulter 31 bildet einen Anschlag für die Hülse 20 und bestimmt die Endposition. Der Weg zwischen den beiden Positionen ist vergleichsweise klein, er beträgt beispielsweise 1 cm oder weniger. Er kann aber auch grösser sein. Beim Verschieben der Hülse 20 wird entsprechend die Dichtung 5 verschoben. Da sich die konische Innenseite 14 wie ersichtlich in Einschubrichtung verjüngt, wird entsprechend die Dichtung 5, welche an dieser konischen Innenseite 14 entlanggleitet, radial zusammengepresst. Durch die entsprechende Verkleinerung des Innendurchmessers wird die Dichtlippe 5a gegen die Aussenseite 19 des Rohrendes 14 gespannt. Gleichzeitig überspringen die Mitnehmer 26 die Enden 24, welche hierbei radial nach innen federnd ausgelenkt werden. Dieses Überspringen der Nocken 25 bildet eine Rastung, die beim Einschieben des Rohrendes 4 deutlich festgestellt werden kann. Das Einrasten gewährleistet die in Figur 2 gezeigte Endposition. Ist die verrastete Endposition gemäss Figur 2 erreicht, so ist wie erwähnt die Dichtung 5 gespannt. Sie gewährleistet einerseits die Abdichtung der Verbindung und gleichzeitig durch die entsprechende Reibung die erforderliche hohe Auszugskraft.

Die Verbindung kann gelöst werden, indem der Ring 27 um die Längsachse der Steckmuffe 1 gedreht wird. Die Mitnehmer 26 werden hierbei mitgedreht und damit der Eingriff der Nocken 25 mit den Mitnehmern 26 aufgehoben. Die Rastverbindung ist damit gelöst und das Rohrende 4 kann mit der Hülse 20 in die in Figur 1 gezeigte Position verschoben werden. Bei dieser Rückzugsbewegung entspannt sich entsprechend die Dichtung 5 und das Rohrende 4 kann aus der Hülse 20 herausgezogen werden. Das Lösen erfolgt ohne Beschädigung der Steckmuffe 1 bzw. der Dichtung 5, die somit nachher wieder benutzt werden kann. Möglich ist auch ein mehrfaches Zusammenstecken und Lösen.

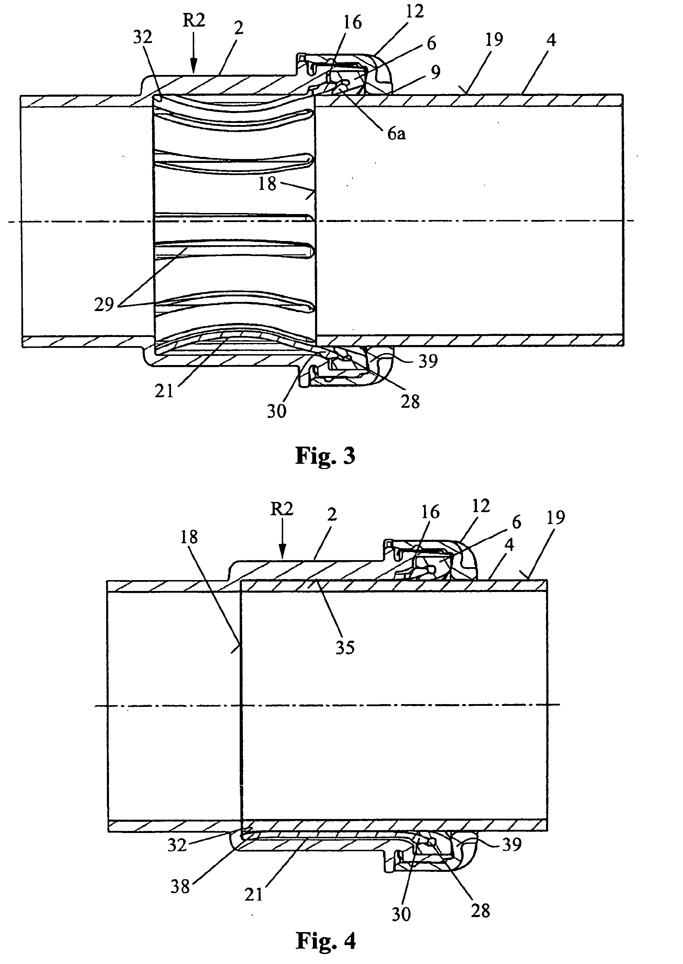

Die Figur 3 zeigt eine Steckmuffe 2 einer Rohrleitung R2, die eine Öffnung 9 zur Aufnahme des Rohrendes 4 aufweist. Ein vorderes Ende 12 der Steckmuffe 2 wird durch einen Ring 39 gebildet, der auf die Steckmuffe 2 aufgerastet ist. In diesem Ring 39 und in einer Nut 16 ist eine Dichtung 6 angeordnet, die ebenfalls ringförmig ausgebildet und aus einem gummielastischen Werkstoff hergestellt ist. Die Dichtung 6 besitzt eine umlaufende innere Dichtlippe 6a.

In die Öffnung 9 ist eine Hülse 21 eingesetzt, die in der Ausgangsstellung eine hyperboloide Form besitzt. Sie besitzt mehrere sich in Längsrichtung erstreckende Schlitze 29, wie die Figur 3 zeigt. Die Hülse 21 ist aus einem geeigneten, vorzugsweise elastischen Kunststoff oder beispielsweise auch aus federelastischem Blech hergestellt.

Die Hülse 21 besitzt einen vorderen umlaufenden und etwas nach aussen verdickten Rand 30, der in der Ausgangsstellung gemäss Figur 3 an einer umlaufenden Rille 28 der Dichtung 6 anliegt. Dieser Rand 30 ist so dimensioniert, dass das Rohrende 4 mit der Stirnseite 18 gemäss Figur 1 in diesen Rand 16 einschiebbar ist. Die Dichtung 6 liegt hierbei ohne wesentliche Spannung an der Aussenseite 19 des Rohrendes 4 an.

Wird das Rohrende 4 von der in Figur 3 gezeigten Ausgangsstellung in die in Figur 4 gezeigte Endstellung verschoben, so wird die Hülse 21 radial gegen eine Innenseite 35 gedehnt und in die in Figur 4 gezeigte im Wesentlichen kreiszylindrische Form gespannt. Die Hülse 21 liegt mit einem inneren Rand 38 an einer Schulter 32 der Steckmuffe 2 an und ist an dieser bei der Dehnung abgestützt. Die Hülse 21 wird beim Einschieben des Rohrendes 4 achsial gestreckt, wobei sich der vordere Rand 30 in Achsialrichtung verschiebt. Beim Übergang in die kreiszylindrische Form wird das Ende 30 der Hülse 21 weiter in die Rille 28 hineingeschoben. Die Dichtung 6 wird hierbei nicht verschoben, jedoch wird die Dichtlippe 6a gegen die Aussenseite 19 des Rohrendes 4 gespannt. Das Spannen erfolgt durch Erweiterung der Rille 28 durch das Ende 30. Ist das Rohrende 4 nun gemäss Figur 4 vollständig bis zur Schulter 32 in die Steckmuffe 2 eingeschoben, so ist entsprechend die Dichtung 6 gespannt und dichtet das Rohrende 4 gegenüber der Steckmuffe 2 ab. Durch die Spannung wird das Rohrende 4 in der Steckmuffe 2 gehalten, so dass das Rohrende 4 nur mit hoher Auszugskraft aus der Muffe 2 entfernt werden könnte. Die Verbindung ist ebenfalls lösbar. Hierbei wird der Ring 29 um die Längsachse der Steckmuffe 2 gedreht. Der Ring 29 wird hierbei so bewegt, dass sich die Dichtung 6 entspannen kann. Die Reibung an der Aussenseite 19 wird dadurch verringert und das Rohrende 4 kann ohne Beschädigung der Dichtung 6 aus der Hülse 21 herausgezogen werden.

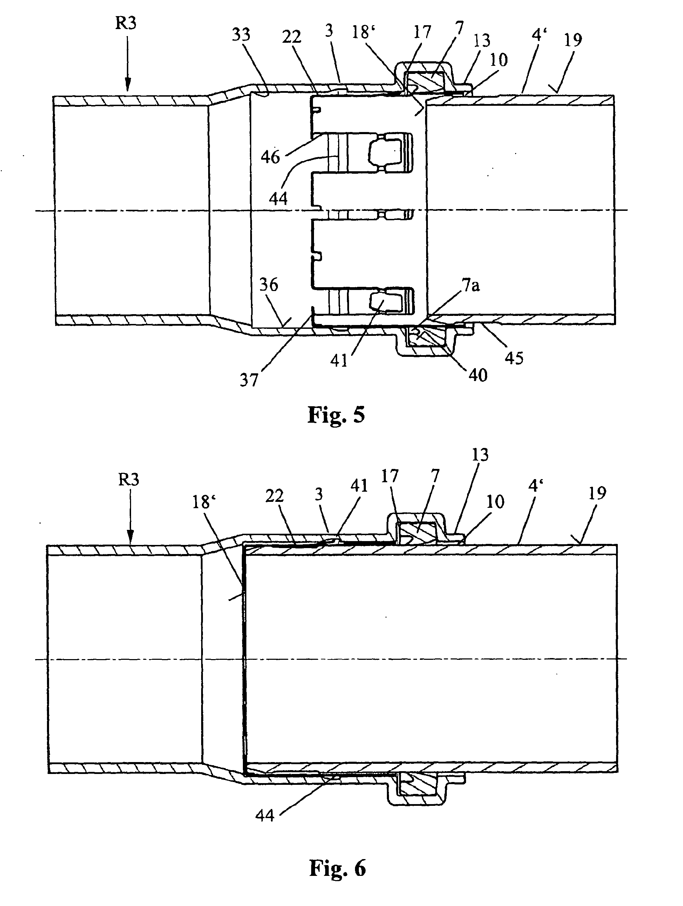

Die Figur 5 zeigt eine Steckmuffe 3 einer Rohrleitung R3, die ebenfalls vorzugsweise eine Abwasserleitung ist. Sie besitzt eine Öffnung 10 zur Aufnahme eines Rohrendes 4'. Dieses Rohrende 4' besitzt in der Nähe einer Stirnseite 18' eine umlaufende Nut 17 an der Aussenseite 19. Eine Dichtung 7 ist in eine Nut 17 einer Innenseite 36 der Steckmuffe 3 gelagert. Die Dichtung 7 ist ebenfalls ringförmig und besitzt eine innere umlaufende Dichtlippe 7a. Die Dichtung 7 ist in diesem Fall radial im Wesentlichen nicht verschiebbar. Die Nut 17 befindet sich innerhalb eines vorderen Randes 13 der Steckmuffe 3.

In die Öffnung 10 ist eine Hülse 22 eingesetzt, die an einem vorderen Ende einen radial nach innen ragenden Rand 37 besitzt. Dieser Rand 37 ist mehrfach durch Schlitze 46 unterbrochen. In diesen Schlitzen 46 ist jeweils eine schwenkbare Rastzunge 41 angeordnet, die in eine Nut 44 einer Innenseite 36 der Steckmuffe 3 einrastbar ist. Die Hülse 22 kann auch in diesem Fall aus einem geeigneten Kunststoff oder beispielsweise aus Blech hergestellt werden.

Die Figur 5 zeigt die Hülse 22 in einer Ausgangsposition. In dieser liegt die Dichtung 7 an einer Aussenseite 40 der Hülse 22 an. Die Dichtung 7 bzw. die Dichtlippe 7a ist hierbei gespannt. Das Rohrende 4' kann im Wesentlichen ohne Reibung in die Hülse 22 eingeschoben werden. Erreicht die Stirnseite 18' des Rohrendes 4' den Rand 37, so wird die Hülse 22 ebenfalls achsial verschoben. Die Hülse 22 ist hierbei an der Innenseite 36 der Steckmuffe 3 geführt. Kurz bevor der Rand 37 eine Schulter 33 an der Innenseite 36 erreicht, rasten die Rastzungen 41 in die umlaufende Nut 44 ein. Die entsprechende Bewegung dieser Rastzungen 41 wird durch die genannte Nut 45 erleichtert, da diese Zungen 41 in diese teilweise ausweichen können.

Die Figur 6 zeigt die Endposition der Hülse 22 und ebenfalls die verrastete Position der Rastzungen 41. Vor dem Erreichen der Endposition der Hülse 22 verlässt diese die Dichtung 7, die sich dadurch an die Aussenseite 19 anlegt und damit das Rohrende 4' gegenüber der Steckmuffe 3 abdichtet. Die Spannung der Dichtung 7 gewährleistet zudem die erforderliche hohe Auszugskraft. Das Einrasten der Rastzungen 41 in die Nut 44 bildet eine feststellbare Rastwirkung. Diese Rastung gibt an, dass die Hülse 22 die erforderliche Einstecktiefe erreicht hat.

### Bezugszeichenliste

- 1: Steckmuffe
- 2: Steckmuffe
- 3: Steckmuffe
- 4: Rohrende
- 5: Dichtung
- 5a: Dichtlippe
- 6: Dichtung
- 6a: Dichtlippe
- 7: Dichtung
- 7a: Dichtlippe
- 8: Öffnung
- 9: Öffnung
- 10: Öffnung
- 11: Ende
- 12: Ende
- 13: Ende
- 14: konische Innenseite
- 15: Nut
- 16: Nut
- 17: Nut
- 18: Stirnseite
- 19: Aussenseite
- 20: Hülse
- 21: Hülse
- 22: Hülse
- 23: Rand
- 24: Ende
- 25: Nocken
- 26: Mitnehmer
- 27: Ring
- 28: Rille
- 29: Schlitz
- 30: Rand
- 31: Schulter (Anschlag)
- 32: Schulter (Anschlag)
- 33: Schulter (Anschlag)
- 34: Innenseite
- 35: Innenseite
- 36: Innenseite
- 37: Rand
- 38: Rand
- 39: Ring
- 40: Aussenseite
- 41: Rastzunge
- 42: Ausnehmung
- 44: Nut
- 45: Nut
- 46: Schlitz
- R1: Rohrleitung
- R2: Rohrleitung
- R3: Rohrleitung

## Patentansprüche

1. Steckmuffe für eine Rohrleitung (R1, R2, R3), mit einem ersten Ende (11, 12, 13), das einen umlaufenden Rand und eine Öffnung (8, 9, 10) für die Aufnahme eines Rohrendes (4, 4') aufweist und mit einer Dichtung (5, 6, 7), die an einer Innenseite (34, 35, 36) der Öffnung (8, 9, 10) in eine umlaufende Nut (15, 16, 17) eingelegt und an die Aussenseite (19) des genannten Rohrendes (4, 4') anlegbar ist, wobei in die Öffnung (8, 9, 10) eine Hülse (20, 21, 22) eingesetzt ist, die durch Einschieben des genannten Rohrendes (4, 4') verschiebbar oder streckbar ist und die mit der Dichtung (5, 6, 7) so zusammenwirkt, dass diese durch Verschieben der Hülse (20, 21, 22) gegen die Aussenseite (19) des genannten Rohrendes (4, 4') spannbar ist, **dadurch gekennzeichnet, dass** die Hülse (20) in Einschubrichtung gesehen nach der Dichtung (5, 6, 7) angeordnet ist und dass die Hülse (20) mit der Dichtung (5) verbunden ist, derart, dass beim Verschieben der Hülse (20) die Dichtung (5) ebenfalls achsial verschoben und gegen die Aussenseite (19) des anzuschliessenden Rohrendes (4, 4') gespannt wird.

2. Steckmuffe nach Anspruch 1, **dadurch gekennzeichnet, dass** die Hülse (20) an einem inneren Rand (23) einen Anschlag für das anzuschliessende Rohrende (4, 4') aufweist.

3. Steckmuffe nach Anspruch 1 oder 2, **dadurch gekennzeichnet, dass** die Dichtung (5) an einer konischen Innenseite (14) der genannten Öffnung (8) so geführt ist, dass sie beim Verschieben radial nach innen bewegt wird.

4. Steckmuffe nach einem der Ansprüche 1 bis 3, **dadurch gekennzeichnet, dass** am ersten Ende (11) der Steckmuffe Mittel (27) zum Lösen der Verbindung angeordnet sind.

5. Steckmuffe nach Anspruch 4, **dadurch gekennzeichnet, dass** die Mittel (27) zum Lösen der Verbindung einen Ring (27) aufweisen, der am genannten ersten Ende (11) drehbar gelagert ist.

6. Steckmuffe nach Anspruch 4 oder 5, **dadurch gekennzeichnet, dass** mit den Mitteln (27) zum Lösen der Verbindung die Hülse (20) achsial in eine Ausgangsstellung verschiebbar ist, wobei die Dichtung (5) entspannt wird.

7. Steckmuffe nach einem der Ansprüche 1 bis 6, **dadurch gekennzeichnet, dass** sie Rastmittel (26) aufweist, welche die Hülse (20) kurz vor der Endstellung verrasten.

## Claims

1. Plug-in socket for a pipeline (R1, R2, R3), having a first end (11, 12, 13), which has an encircling periphery and an opening (8, 9, 10) for accommodating a pipe end (4, 4'), and having a seal (5, 6, 7), which is placed in an encircling groove (15, 16, 17) on an inner side (34, 35, 36) of the opening (8, 9, 10) and can be positioned against the outer side (19) of the abovementioned pipe end (4, 4'), the opening (8, 9, 10) having inserted into it a sleeve (20, 21, 22) which can be displaced or extended as a result of the abovementioned pipe end (4, 4') being pushed in and which interacts with the seal (5, 6, 7) such that, by virtue of the sleeve (20, 21, 22) being displaced, it can be clamped against the outer side (19) of the abovementioned pipe end (4, 4'), **characterized in that** the sleeve (20) is arranged downstream of the seal (5, 6, 7), as seen in the pushing-in direction, and **in that** the sleeve (20) is connected to the seal (5) such that, when the sleeve (20) is displaced, the seal (5) is likewise displaced axially and is clamped against the outer side (19) of the pipe end (4, 4') which is to be connected.

2. Plug-in socket according to Claim 1, **characterized in that** the sleeve (20) has, along an inner periphery (23), a stop for the pipe end (4, 4') which is to be connected.

3. Plug-in socket according to Claim 1 or 2, **characterized in that** the seal (5) is guided on a conical inner side (14) of the abovementioned opening (8) such that it is moved radially inwards upon displacement.

4. Plug-in socket according to one of Claims 1 to 3, **characterized in that** means (27) for releasing the connection are arranged at the first end (11) of the plug-in socket.

5. Plug-in socket according to Claim 4, **characterized in that** the means (27) for releasing the connection have a ring (27) which is mounted in a rotatable manner at the abovementioned first end (11).

6. Plug-in socket according to Claim 4 or 5, **characterized in that** the means (27) for releasing the connection can be used to displace the sleeve (20) axially into a starting position, the seal (5) being relieved of stressing.

7. Plug-in socket according to one of Claims 1 to 6, **characterized in that** it has latching means (26) which latch the sleeve (20) just in front of the end position.

## Revendications

1. Manchon emboîtable pour une conduite tubulaire (R1, R2, R3), comprenant une première extrémité (11, 12, 13) qui présente un bord périphérique et une ouverture (8, 9, 10) pour recevoir une extrémité de tube (4, 4'), et comprenant un joint d'étanchéité (5, 6, 7) qui est introduit au niveau d'un côté interne (34, 35, 36) de l'ouverture (8, 9, 10) dans une rainure périphérique (15, 16, 17) et qui peut être appliqué contre le côté extérieur (19) de ladite extrémité de tube (4, 4'), une douille (20, 21, 22) étant insérée dans l'ouverture (8, 9, 10), laquelle peut être coulissée ou étirée par l'enfoncement de ladite extrémité de tube (4, 4'), et coopère avec le joint d'étanchéité (5, 6, 7) de telle sorte que celui-ci puisse être serré par déplacement de la douille (20, 21, 22) contre le côté extérieur (19) de ladite extrémité de tube (4, 4'), **caractérisé en ce que** la douille (20), vue dans la direction d'enfoncement, est disposée derrière le joint d'étanchéité (5, 6, 7) et **en ce que** la douille (20) est connectée au joint d'étanchéité (5), de telle sorte que lors du coulissement de la douille (20), le joint d'étanchéité (5) soit également coulissé axialement et soit serré contre le côté extérieur (19) de l'extrémité de tube (4, 4') à raccorder.

2. Manchon emboîtable selon la revendication 1, **caractérisé en ce que** la douille (20) présente au niveau d'un bord interne (23) une butée pour l'extrémité de tube (4, 4') à raccorder.

3. Manchon emboîtable selon la revendication 1 ou 2, **caractérisé en ce que** le joint d'étanchéité (5) est guidé sur un côté intérieur conique (14) de ladite ouverture (8) de telle sorte qu'il soit déplacé radialement vers l'intérieur lors du coulissement.

4. Manchon emboîtable selon l'une quelconque des revendications 1 à 3, **caractérisé en ce que** l'on dispose au niveau de la première extrémité (11) du manchon emboîtable des moyens (27) pour desserrer la connexion.

5. Manchon emboîtable selon la revendication 4, **caractérisé en ce que** les moyens (27) pour desserrer la connexion présentent une bague (27), qui est montée à rotation sur ladite première extrémité (11).

6. Manchon emboîtable selon la revendication 4 ou 5, **caractérisé en ce que** la douille (20) peut être coulissée axialement dans une position de sortie avec les moyens (27) pour desserrer la connexion, le joint d'étanchéité (5) étant alors détendu.

7. Manchon emboîtable selon l'une quelconque des revendications 1 à 6, **caractérisé en ce qu'**il présente des moyens d'encliquetage (26) qui encliquètent la douille (20) juste avant la position d'extrémité.
